# EUROPÄISCHE PATENTANMELDUNG

(11) **EP 2 602 145 A2**
(43) Veröffentlichungstag der Anmeldung: **12.06.2013**
(21) Anmeldenummer: 12193153.9
(22) Anmeldetag: 19.11.2012
(51) Int. Cl.: B60K 15/04, B65D 47/14

(54) **Bedienteil-Sicherungssystem**

(30) Priorität: 06.12.2011 DE 102011087782
(71) Anmelder: Kipp Verpachtungen e.K., 72172 Sulz a.N. (DE)
(72) Erfinder: Schanz, Hans, 72189 Vöhringen (DE); Wagner, André, 72175 Dornhan (DE)
(74) Vertreter: Kohler Schmid Möbus

(57) **Zusammenfassung**

Ein Bedienteil-Sicherungssystem, umfassend
- ein Bedienteil (9) und
- ein flexibles, langgestrecktes Leinenteil (1),
wobei das Leinenteil (1) an einem ersten Ende (E1) eine Sicherungsstruktur (2), insbesondere eine Sicherungsöse, und an einem zweiten Ende (E2) eine Hakeneinrichtung (3) umfasst, ist dadurch gekennzeichnet,
dass das Bedienteil-Sicherungssystem weiterhin ein Zwischenteil (7) aufweist, an welchem eine Konterstruktur (14) zur Befestigung der Hakeneinrichtung (3) ausgebildet ist, und dass das Bedienteil (9) eine Halterungsstruktur (15) zur Befestigung des Zwischenteils (7) aufweist. Die Erfindung stellt ein einfach aufgebautes und flexibel einsetzbares Bedienteil-Sicherungssystem vor.

## Beschreibung

### Bedienteil-Sicherungssystem

Die Erfindung betrifft ein Bedienteil-Sicherungssystem, umfassend
- ein Bedienteil und
- ein flexibles, langgestrecktes Leinenteil,
wobei das Leinenteil an einem ersten Ende eine Sicherungsstruktur, insbesondere eine Sicherungsöse, und an einem zweiten Ende eine Hakeneinrichtung umfasst.

Eine solches Bedienteil-Sicherungssystem ist beispielsweise bekannt geworden durch Tankverschlussdeckel mit Sicherung der Firma Reutter GmbH, Waiblingen, DE.

Bedienteile werden vielfältig eingesetzt, etwa um an Maschinen Einstellungen zu verändern, Öffnungen zu verschließen oder auch zur Sicherung von abnehmbaren Maschinenteilen. Das Bedienteil kann dazu beispielsweise die Befestigung eines verschiebbaren Maschinenelements aufheben oder erwirken, oder aber das Bedienteil kann entfernt werden, um ein Maschinenteil abzunehmen, und installiert werden, um das Maschinenteil zu fixieren.

Im Allgemeinen ist vorgesehen, das Bedienteil in bestimmten Situation von einem Objekt zu entfernen, und später wieder am Objekt zu befestigen. In dieser Zwischenzeit soll das Bedienteil nicht verloren gehen.

Es ist hierfür bekannt, das Bedienteil an einem flexiblen Leinenteil zu befestigen, und das Leinenteil wiederum an dem Objekt zu befestigen. Das Leinenteil ist lange genug, um das Bedienteil bequem beim Befestigen und Entfernen zu handhaben; andererseits verhindert es, dass das Bedienteil allzu weit vom Objekt entfernt werden kann, und somit nicht verloren geht.

Um das Leinenteil einfach am Bedienteil befestigen zu können, ist bei der Bedienteil-Sicherung der Firma Reutter, siehe oben, vorgesehen, das Leinenteil mit einer keilartigen Hakeneinrichtung auszustatten, welche in eine Konterstruktur am Bedienteil eingeführt und in dieser verhakt werden kann.

Nachteilig daran ist, dass das Leinenteil mit seiner Hakeneinrichtung und das Bedienteil mit seiner Konterstruktur aufeinander abgestimmt sein müssen, damit eine sichere Befestigung erfolgen kann, und insbesondere die Hakeneinrichtung nicht zu viel Spiel aufweist oder gar überhaupt nicht am Bedienteil befestigt werden kann. Insbesondere ist es kaum möglich, das gleiche Leinenteil für verschiedene Bedienteile einzusetzen, da oft geeignete Konterstrukturen am Bedienteil fehlen und oft auch nur schwer ausgebildet werden können. Bohrungen in Bedienteilen sind in der Regel nur dann als Konterstrukturen geeignet, wenn die Materialstärke zur Hakeneinrichtung passt; die Materialstärke des Bedienteils zu verändern wäre jedoch vergleichsweise aufwändig und ist oft aus baulichen Gründen (etwa Festigkeits- und Gewichtsgründen) unerwünscht.

### Aufgabe der Erfindung

Der Erfindung liegt die Aufgabe zugrunde, ein einfach aufgebautes und flexibel einsetzbares Bedienteil-Sicherungssystem vorzustellen.

### Kurze Beschreibung der Erfindung

Diese Aufgabe wird gelöst durch ein Bedienteil-Sicherungssystem der eingangs genannten Art, das dadurch gekennzeichnet ist, dass das Bedienteil-Sicherungssystem weiterhin ein Zwischenteil aufweist, an welchem eine Konterstruktur zur Befestigung der Hakeneinrichtung ausgebildet ist, und dass das Bedienteil eine Halterungsstruktur zur Befestigung des Zwischenteils aufweist.

Die Hakeneinrichtung des Leinenteils (Sicherungsleinenteils) wird beim erfindungsgemäßen Bedienteil-Sicherungssystem nicht direkt im Bedienteil verhakt bzw. befestigt, sondern im Zwischenteil. Daher braucht im Bedienteil keine Konterstruktur für das Leinenteil ausgebildet werden. Stattdessen wird im Bedienteil eine Halterungsstruktur ausgebildet, an der das Zwischenteil befestigt werden kann.

Die Halterungsstruktur ist relativ einfach in einem Bedienteil auszubilden, insbesondere auch bei verschiedenen Materialstärken des Bedienteils, so dass die Materialstärke des Bedienteils grundsätzlich nicht verändert zu werden braucht, um das Bedienteil-Sicherungssystem einzusetzen. Im Zwischenteil hingegen kann leicht eine geeignete Konterstruktur für das Leinenteil ausgebildet werden, wodurch das Bedienteil nicht beeinträchtigt wird.

Durch die Vermittlung des Zwischenteils kann grundsätzlich jeder Leinenteiltyp mit grundsätzlich jedem Bedienteiltyp kombiniert werden. Insbesondere ist es möglich, einen standardisierten Leitenteiltypus für verschiedenste Bedienteile einzusetzen. Dadurch können in der Fertigung Skaleneffekte genutzt werden, und so Bedienteil-Sicherungssysteme verbilligt werden.

Bevorzugt ist die Hakeneinrichtung im eingehakten Zustand gegenüber dem Zwischenteil (und damit auch dem Bedienteil) frei drehbar. Das Leinenteil hat typischerweise eine Länge zwischen 10cm und 40cm, bevorzugt zwischen 15cm und 25cm. Das Zwischenteil ist bevorzugt einstückig ausgebildet. Das Zwischenteil und das Bedienteil sind separate Teile, die bevorzugt miteinander verrastet werden.

Die Sicherungsstruktur, typischerweise eine Sicherungsöse, ist meist an einem größeren Objekt (etwa einer Maschine) befestigt, etwa mittels einer Schraube, die die Sicherungsöse durchragt.

Das Bedienteil ist für eine direkte Manipulation, etwa mit der Hand, vorgesehen, beispielsweise um das Bedienteil, welches als Sicherung oder Befestigung für ein abnehmbares Maschinenteil dient, abzunehmen oder zu installieren, oder auch um an einer Maschine eine Einstellung zu verändern.

### Bevorzugte Ausführungsformen der Erfindung

Bei einer bevorzugten Ausführungsform des erfindungsgemäßen Bedienteil-Sicherungssystem ist vorgesehen, dass die Hakeneinrichtung eine elastisch verformbare Verdickung umfasst, und dass die Konterstruktur eine Öffnung umfasst, wobei die Verdickung in einem elastisch zusammengepressten Zustand durch die Öffnung hindurchgeführt werden kann, nicht aber in einem elastisch entspannten Zustand. Diese Ausführungsform ist besonders einfach zusammenzubauen. Die Verdickung passt im elastisch entspannten Zustand - unabhängig von der Verdrehposition des Leinenteils zum Zwischenteil - nicht durch die Öffnung der Konterstruktur, wodurch eine Verhakung erreicht wird. Die Konterstruktur begrenzt die Öffnung, wobei die Konterstruktur von der Hakeneinrichtung im eingehakten Zustand hintergriffen wird. Die Öffnung hat bevorzugt einen kreisrunden Durchmesser, ebenso wie der die Öffnung durchragende Bereich der Hakeneinrichtung (meist eine Einschnürung). Die Hakeneinrichtung bzw. die Verdickung ist typischerweise aus einem gummielastischen Werkstoff gefertigt. Alternativ kann die Hakeneinrichtung auch mit einer Federmechanik ausgebildet sein.

Bei einer bevorzugten Weiterbildung dieser Ausführungsform ist die Verdickung im Wesentlichen keilförmig ausgebildet, wobei sich die Verdickung zum zweiten Ende des Leinenteils hin verjüngt. Die Verdickung verjüngt sich also nach außen hin und erleichtert so das Einführung der Verdickung in die Öffnung der Konterstruktur.

Bevorzugt ist auch eine Ausführungsform, bei der die Verdickung im elastisch entspannten Zustand an der dem zweiten Ende des Leinenteils abgewandten Seite eine Sperrfläche ausbildet, die bei eingehakter Hakeneinrichtung an die Konterstruktur in einem Bereich um die Öffnung herum anlegbar ist. Bevorzugt ist die Sperrfläche umlaufend ausgebildet. Die Sperrfläche kann Zugkräfte aufnehmen (die Sperrfläche verläuft bevorzugt im Wesentlichen senkrecht zur Zugrichtung) und so ein Herausziehen der Hakeneinrichtung effizient blockieren.

Besonders bevorzugt ist eine Weiterbildung, die vorsieht, dass das Leinenteil weiterhin ein Stoppelement umfasst, welches benachbart zur Verdickung an deren dem zweiten Ende abgewandten Seite ausgebildet ist, und dass das Stoppelement so breit ausgebildet ist, dass es nicht durch die Öffnung der Konterstruktur hindurchgeführt werden kann, so dass im eingehakten Zustand das Leinenteil in einem Einschnürungsbereich zwischen der Verdickung und dem Stoppelement die Öffnung durchragt. Durch das Stoppelement wird die Verschiebungslage der Hakeneinrichtung bzw. des Leinenteils in der Konterstruktur bzw. im Zwischenteil zu einer zweiten Seite hin begrenzt, was den Zusammenbau und auch die spätere Handhabung vereinfacht. Bevorzugt ist die Tiefe der Öffnung geringfügig kleiner als die Länge des Einschnürungsbereichs (typischerweise mit ca. 0,5mm bis 2,0mm Spiel), so dass die Hakeneinrichtung im eingehakten Zustand leicht drehbar gehalten ist, aber das Leinenteil nicht allzu weit in das Zwischenteil eingeführt werden kann.

Bevorzugt ist dabei, wenn im eingehakten Zustand das Stoppelement die Öffnung vollständig überdeckt. Dadurch werden Verschmutzungen oder ein unbeabsichtigtes Eingreifen in die Öffnung ("Hängenbleiben") vermieden.

Besonders bevorzugt ist das Stoppelement im Wesentlichen schirmförmig ausgebildet. Dadurch wird die Überdeckung der Öffnung besonders einfach.

Bevorzugt ist es auch, wenn das Leinenteil mit einem Winkel von maximal 85°, bevorzugt maximal 45°, gegen eine Längserstreckungsrichtung der Hakeneinrichtung im Bereich des Stoppelements abknickt. Der optimale Knickwinkel hängt von der Position (Befestigungsort) der Sicherungsstruktur (etwa der Sicherungsöse) ab. Durch eine optimale Winkelwahl können Schermomente minimiert werden, wodurch der Verschleiß verringert wird.

Bei einer besonders bevorzugten Ausführungsform ist das Zwischenteil an und/oder in der Halterungsstruktur verrastbar. Dadurch ist der Zusammenbau des Bedienteil-Sicherungssystems besonders einfach.

Vorteilhafter Weise ist bei einer Weiterbildung dieser Ausführungsform vorgesehen, dass das Zwischenteil und die Halterungsstruktur einen oder mehrere Rastwulste und eine oder mehrere Rastkanten, insbesondere Rastnuten, ausbilden. Diese Weiterbildung hat sich in der Praxis aufgrund ihres einfachen Aufbaus bewährt Die Rastwulste und/oder Rastkanten sind bevorzugt umlaufend ausgebildet, wodurch ein besonders sicherer Halt erreicht wird.

Bei einer bevorzugten Ausführungsform ist vorgesehen, dass das Zwischenteil als ein Deckel ausgebildet ist, und dass die Halterungsstruktur eine Ausnehmung im Bedienteil umfasst, in welche der Deckel einsetzbar ist, wobei der Deckel im eingesetzten Zustand die Ausnehmung verschließt. Der Deckel richtet eine abgeschlossene, bevorzugt stufenfreie ("glatte") Oberfläche der Gesamtheit von Bedienteil und Zwischenteil ein, was eine Verschmutzung verringert und auch eine bessere manuelle Handhabung ermöglicht.

Eine bevorzugte Weiterbildung dieser Ausführungsform sieht vor, dass der Deckel kreisrund ausgebildet ist, insbesondere wobei die Öffnung als eine Durchbruchöffnung in der Mitte des Deckels ausgebildet ist. Die kreisrunde Form erleichtert wiederum den Zusammenbau. Die mittige Anordnung vermeidet größere Bewegungen des Leinenteils im Falle einer Drehbedienung des Bedienteils.

Vorteilhaft ist auch eine Ausführungsform, bei der das Zwischenteil eine andere Farbe aufweist als das Bedienteil. Dadurch kann das Bedienteil leicht identifiziert werden, etwa im Vergleich mit anderen Bedienteilen mit andersfarbigen Zwischenteilen. Alternativ kann auch eine identische Farbe gewählt werden, um die Aufmerksamkeit eines Betrachters nicht auf das Zwischenteil zu lenken (und entsprechend die Aufmerksamkeit für andere, wichtigere Bauteile oder Vorgänge zur Verfügung zu halten).

Besonders bevorzugt ist eine Ausführungsform, die vorsieht, dass das Bedienteil als ein Drehgriff, insbesondere als ein Kreuzgriff oder Sterngriff, oder als ein Steckbolzen, insbesondere als ein Arretierbolzen mit betätigbaren Spreizelementen, ausgebildet ist. Der Drehgriff weist typischerweise ein Gewinde auf, mit dem dieser an einem entsprechenden Gegengewinde ab- und angeschraubt werden kann; der Drehgriff kann auch an einer Welle befestigt werden, um diese drehen zu können. Der Steckbolzen wird typischerweise in eine Bohrung oder mehrere Bohrungen eingeschoben, insbesondere um ein Bauteil oder Bauteile, in denen die Bohrungen ausgebildet sind, zu sichern. Ein Arretierbolzen kann dabei mittels manuell betätigbaren Spreizelementen einen sichernden Hintergriff einrichten bzw. aufheben; meist ist eine Vorspannung in die spreizende (hintergreifende) Position vorgesehen, etwa durch eine Federmechanik. Durch das Bedienteil-Sicherungssystem können der Drehgriff oder der Steckbolzen vor einem unbeabsichtigten Verbringen/Verlegen bewahrt werden.

Besonders bevorzugt ist das Leinenteil mit einem gummielastischen Werkstoff gefertigt. Dies verbessert die Handhabung des Leinenteils. Zusätzlich kann eine Faserverstärkung vorgesehen sein. Das Leinenteil ist bevorzugt einstückig gefertigt. Das Leinenteil kann (unabhängig vom vorher gesagten) auch eine Schnur oder Kette umfassen.

In den Rahmen der vorliegenden Erfindung fällt auch eine gesicherte Bedienteil-Anordnung, umfassend ein erfindungsgemäßes Bedienteil-Sicherungssystem und ein Objekt, insbesondere eine Maschine, wobei das Zwischenteil an oder in der Halterungsstruktur des Bedienteils befestigt ist, wobei die Hakeneinrichtung des Leinenteils an der Konterstruktur des Zwischenteils eingehakt ist, und wobei die Sicherungsstruktur des Leinenteils am Objekt befestigt ist. Das Bedienteil bleibt aufgrund der Sicherung mittels des Leinenteils stets im Bereich des Objekts, auch wenn das Bedienteil vom Objekt demontiert wurde.

Ebenfalls in den Rahmen der vorliegenden Erfindung fällt eine Montagegruppe, umfassend eine erfindungsgemäße, gesicherte Bedienteil-Anordnung und wenigstens ein durch das Bedienteil am Objekt gesichertes Bauteil mit einer Bohrung, wobei
- die Bohrung des Bauteils vom Bedienteil durchragt wird, und das Bedienteil zusätzlich zur Befestigung über das Leinenteil mit einem die Bohrung durchragenden Abschnitt am Objekt reversibel befestigt ist,
- oder die Bohrung des Bauteils von einem Sicherungsfortsatz des Objekts durchragt wird, und das Bedienteil zusätzlich zur Befestigung über das Leinenteil an einem die Bohrung durchragenden Abschnitt des Sicherungsfortsatzes reversibel befestigt ist. In der Montagegruppe ist auf einfache Weise das mit der Bohrung versehene Bauteil durch das Bedienteil gesichert (am Objekt befestigt). Das Bauteil kann jedoch nach Entfernen des Bedienteils entfernt oder bewegt werden. Die reversible Befestigung des Bedienteils erfolgt am einfachsten durch eine Verschraubung oder durch einen elastisch aufhebbaren Hintergriff. Man beachte, dass das Bedienteil oder der Sicherungsfortsatz auch mehrere, hintereinander angeordnete Bauteile durchragen kann, um diese zu sichern.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Seitenansicht eines Leinenteils für ein erfindungsgemäßes Bedienteil-Sicherungssystem;
- Fig. 2: eine schematische Seitenansicht des Leinenteils von Fig. 1 mit montiertem Zwischenteil;
- Fig. 3: eine schematische Seitenansicht des Leinenteils von Fig. 1 mit montiertem Zwischenteil, in einer um 90° gegenüber Fig. 2 gedrehten Darstellung;
- Fig. 4: eine schematische Querschnittsansicht eines erfindungsgemäßen, zusammengebauten Bedienteil-Sicherungssystems, umfassend das Leinenteil und das Zwischenteil von Fig. 2, mit einem als Drehgriff ausgebildeten Bedienteil;
- Fig. 5: ein vergrößerter Ausschnitt aus Fig. 4 im Bereich des Zwischenteils;
- Fig. 6: eine schematische Aufsicht auf das Bedienteil-Sicherungssystem von Fig. 4;
- Fig. 7: eine schematische Seitenansicht des Bedienteil-Sicherungssystems von Fig. 4;
- Fig. 8: eine erste Ausführungsform einer erfindungsgemäßen Montagegruppe, wobei das Bedienteil mit einem Gewindebolzen durch ein gesichertes Bauteil ragt und in einem Objekt verschraubt ist, in schematischer Querschnittsansicht;
- Fig. 9: eine zweite Ausführungsform einer erfindungsgemäßen Montagegruppe, wobei das Objekt einen Sicherungsfortsatz umfasst, der durch ein gesichertes Bauteil ragt und an dem das Bedienteil verschraubt ist, in schematischer Querschnittsansicht;
- Fig. 10: eine dritte Ausführungsform einer erfindungsgemäßen Montagegruppe, wobei das Bedienteil als Arretierbolzen ausgebildet ist, der ein gesichertes Bauteil durchragt und das Objekt hintergreift.

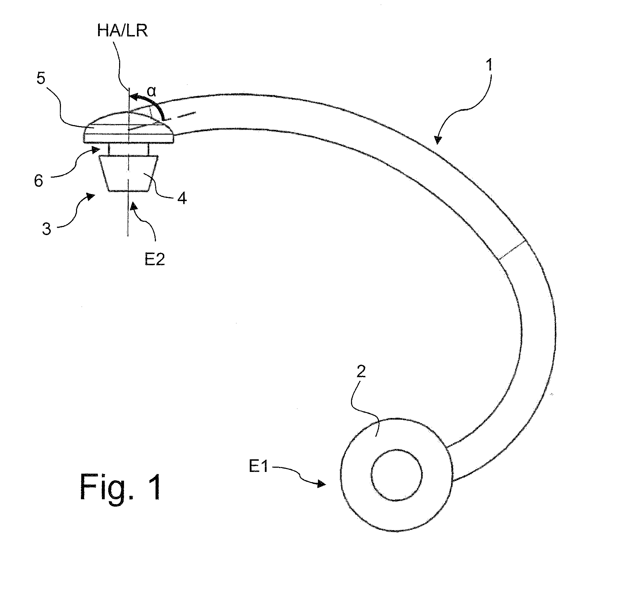

**Figur 1** zeigt in einer schematischen Seitenansicht ein Leinenteil 1 für eine erste Ausführungsform eines erfindungsgemäßen Bedienteil-Sicherungssystems.

Das Leinenteil 1 ist flexibel und in einen leicht bebogenen Zustand gezeigt. Es ist in diesem Ausführungsbeispiel einteilig ausgebildet und vollständig aus einem gummielastischen Material gefertigt.

Das Leinenteil 1 weist an einem ersten Ende E1 eine Sicherungsstruktur 2, hier eine Sicherungsöse, auf, mit der das Leinenteil 1 an einem größeren Objekt befestigt werden kann, etwa mittels einer die Sicherungsöse durchgreifenden Schraube. Alternativ sind auch Klemmungen oder dergleichen zur Befestigung der Sicherungsstruktur 2 möglich.

An einem zweiten Ende E2 weist das Leinenteil 1 eine Hakeneinrichtung 3 auf, die hier mit einer keilförmigen Verdickung 4 ausgebildet ist. Im Bereich der Hakeneinrichtung 3 ist weiterhin ein schirmförmiges Stoppelement 5 ausgebildet, wobei die Verdickung 4 und das Stoppelement 5 durch eine Einschnürung 6 voneinander getrennt sind.

In der gezeigten Ausführungsform sind die Verdickung 4, die Einschnürung 6 und das Stoppelement 5 rotationssymmetrisch bezüglich einer Hakenachse HA ausgebildet; die Hakenachse HA markiert gleichzeitig eine Längserstreckungsrichtung LR der Hakeneinrichtung 3. Der Winkel α zwischen der Längserstreckungsrichtung LR der Hakeneinrichtung 3 und dem sich anschließenden, vom Stoppelement 5 wegführenden Leinenteil 2 beträgt hier ca. 75°.

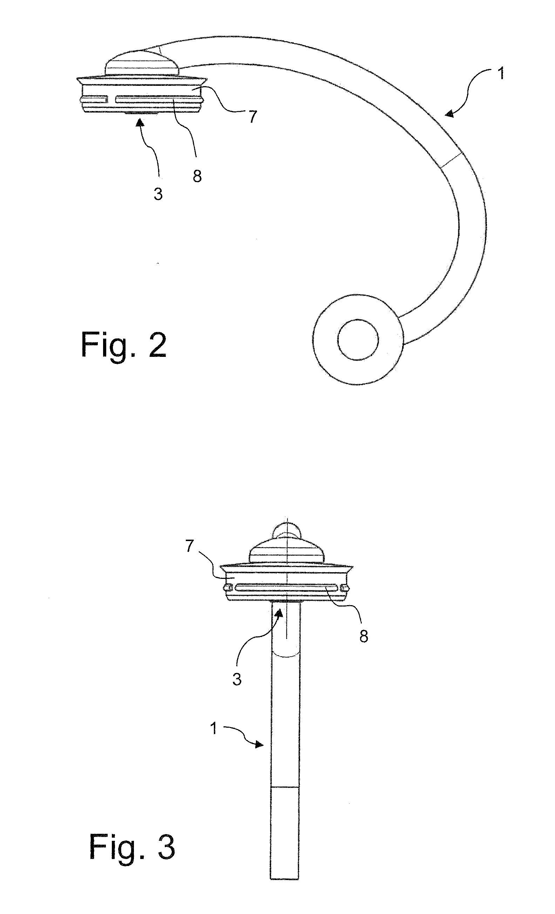

Wie in den **Figuren 2 und 3** in verschiedenen Seitenansichten dargestellt, kann an der Hakeneinrichtung 3 ein Zwischenteil 7 befestigt werden. Am einteiligen Zwischenteil 7 sind Rastwulste 8 ausgebildet.

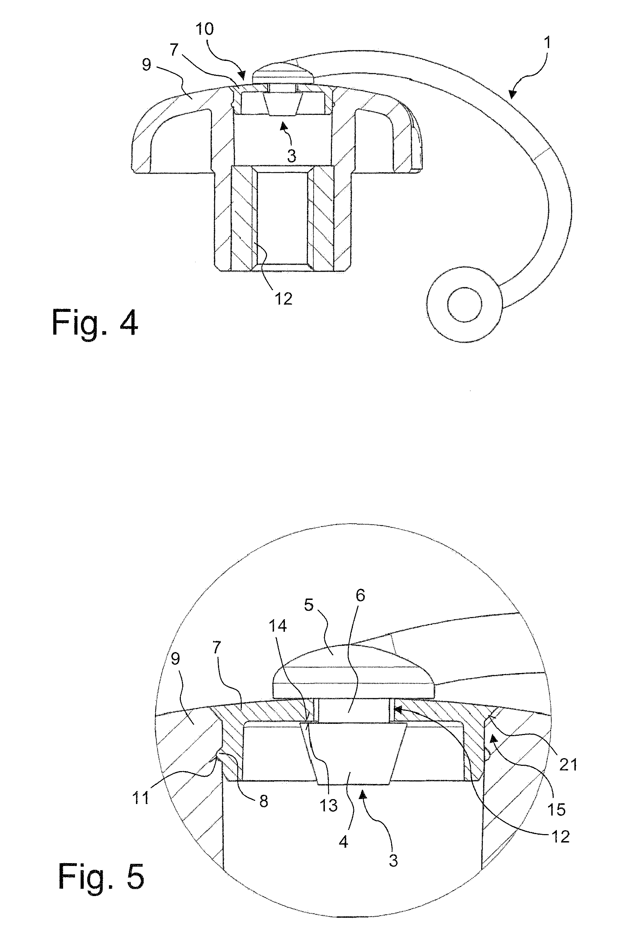

Aus den Querschnittsdarstellungen der **Figuren 4 und 5** ist ersichtlich, wie das Zwischenteil 7 in einem Bedienteil 9 befestigt werden kann.

Im Bedienteil 9, das hier als ein Drehgriff ausgebildet ist, ist eine Ausnehmung 10 vorgesehen, die vom Zwischenteil 7 als Deckel stufenlos verschlossen wird. Das Zwischenteil 7 rastet dabei mit seinen Rastwulsten 8 in einer umlaufenden Rastnut 11 des Bedienteils 9; die Ausnehmung 10 im Bereich der Rastnuten 11 und im Bereich einer angeschrägten Oberkante 21 der Ausnehmung 10 wirkt dabei als eine Halterungsstruktur 15 für das Zwischenteil 7. Durch die Ausnehmung 10 ist das Bedienteil 9 besonders leicht aus Kunststoff zu fertigen, insbesondere ohne einen Vollguss im zentralen Bereich.

Das Bedienteil 9 weist in seinem der Ausnehmung 10 abgewandten Bereich ein Innengewinde 12 auf, mit dem das Bedienteil 9 an einer Gewindestange oder dergleichen aufgeschraubt und abgeschraubt werden kann.

Ebenfalls ersichtlich ist eine Öffnung 12 im Zentrum des Zwischenteils 7, die von der Hakeneinrichtung 3 im Bereich der Einschnürung 6 durchragt wird. Die Einschnürung 6 ist geringfügig länger als die Tiefenerstreckung der Öffnung 12, so dass die Hakeneinrichtung 3 zwischen Verdickung 4 und Stoppelement 5 etwas Spiel hat, insbesondere für eine leichte Drehbarkeit gegenüber dem Zwischenteil 7 (und dem Bedienteil 9). Zum Durchführen der Verdickung 4 durch die hier im Querschnitt kreisförmige Öffnung 12 wurde die Verdickung 4 elastisch gequetscht. Im gezeigten, elastisch entspannten Zustand ist die Verdickung 4 jedoch so breit, dass sie nicht durch die Öffnung 12 passt und daher das Leinenteil 1 am Zwischenteil 7 hält.

Im eingehakten Zustand der Hakeneinrichtung 3 liegt die Verdickung 4 mit rückwärtigen Sperrflächen 13 am Zwischenteil 7 im Bereich um die Öffnung 12 an; das Zwischenteil 7 wirkt in diesem Bereich als Konterstruktur 14, an der die Verdickung 4 verhakt ist.

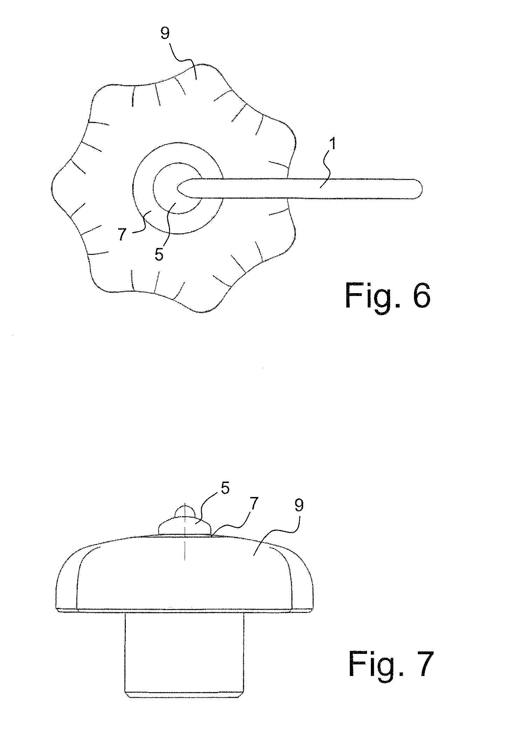

Aus der Aufsicht auf das Bedienteil-Sicherungssystem in **Figur 6** und der Seitenansicht in **Figur 7** ist ersichtlich, dass das schirmförmige Stoppelement 5 zwar die Öffnung (Bzz. 12 in Fig. 5) des Zwischenteils 7 überdeckt, nicht aber den vollen Durchmesser des Zwischenteils 7. Das Bedienteil 9 ist hier siebenzählig ausgebildet.

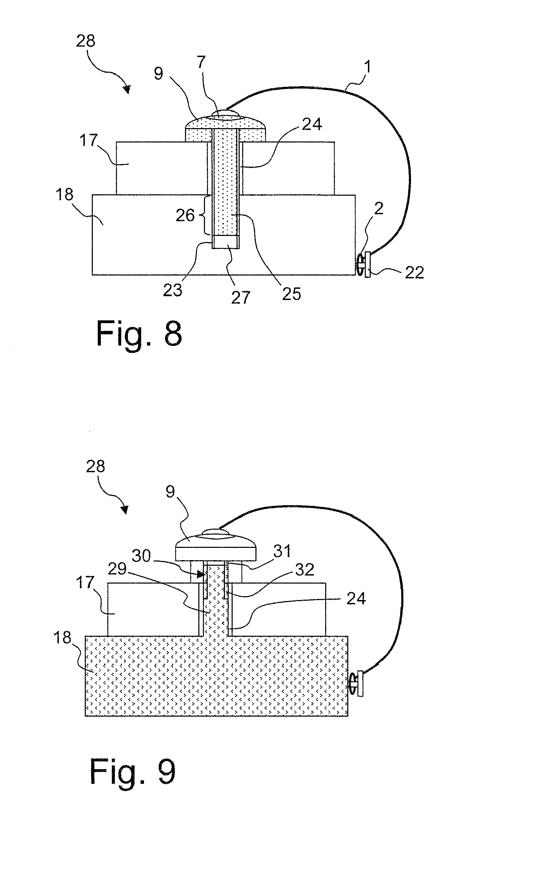

In **Figur 8** dargestellt ist ein erfindungsgemäßes Bedienteil-Sicherungssystem, umfassend ein als Drehgriff ausgebildetes Bedienteil 9, ein Zwischenteil 7 und ein Leinenteil 1, wobei die Sicherungsstruktur 2 des Leinenteils 1, die hier als Sicherungsöse ausgebildet ist, hier mit einem Nagel 22 an einem Objekt 18 befestigt ist. Das am Objekt 18 befestigte Bedienteil-Sicherungssystem wird auch als eine gesicherte Bedienteil-Anordnung bezeichnet. Für eine bessere Übersicht sind Bedienteil 9 und Zwischenteil 7 mit einem Punktmuster versehen.

Das Bedienteil 9 sichert hier ein Bauteil 17, welches mit einer Bohrung 24 versehen ist, am Objekt 18. Das Bedienteil 9, welches hier einen Gewindebolzen 25 (der fest, insbesondere drehfest, im übrigen Bedienteil 9 gelagert ist) aufweist, durchragt mit dem Gewindebolzen 25 die Bohrung 24. Ein in Fig. 8 unterer Abschnitt 26 des Gewindebolzens 25 ist in einer mit einem Innengewinde 23 versehenen Ausnehmung 27 des Objekts 18 verschraubt, so dass das Bedienteil 9 nicht nur über das Leinenteil 1, sondern auch mittels des Gewindebolzens 25 direkt am Objekt 18 befestigt ist. Zwischen dem Bedienteil 9 und dem Objekt 18 ist das Bauteil 17 eingespannt und kann daher nicht entfernt werden.

Zum Entfernen des Bauteils 17 kann das Bedienteil 9 aus dem Objekt 18 herausgeschraubt und entfernt werden. Zur erneuten Befestigung des Bauteils 17 kann das Bedienteil 9 mit dem Gewindebolzen 25 wieder durch die Bohrung 24 hindurch geführt und in der Ausnehmung 27 verschraubt werden.

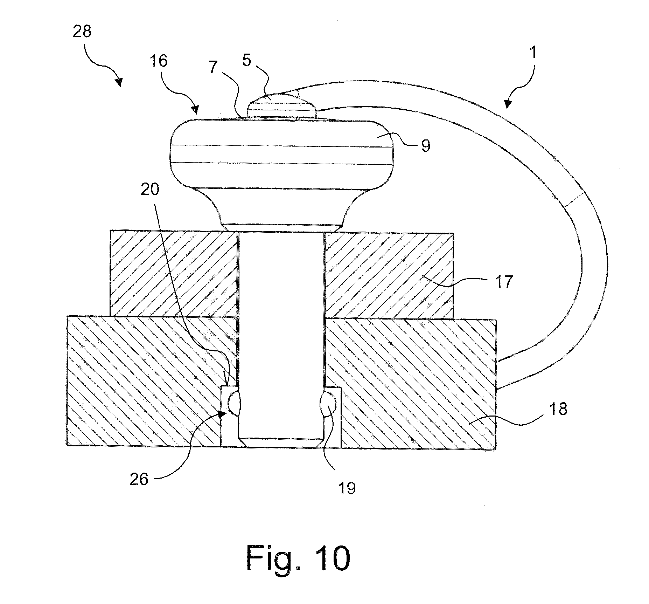

Das am Objekt 18 gesicherte Bedienteil-Sicherungssystem mit gesichertem Bauteil 17 bildet eine erfindungsgemäße Montagegruppe 28. Beispielsweise kann das Objekt 18 ein Maschinenrahmen (etwa einer Werkzeugmaschine) und das Bauteil 17 eine Schutzabdeckung (welche nur zu Montage- oder Reinigungszwecken entfernt wird) sein. Ein typisches, im Rahmen der Erfindung gesichertes Bauteil 17 ist in einer Richtung quer zur Bohrung 24 (in Fig. 8 in horizontaler Richtung) weiter ausgedehnt als das Bedienteil 9 (siehe auch Figuren 9, 10).

**Figur 9** zeigt eine zweite Ausführungsform einer erfindungsgemäßen Montagegruppe 28; es werden nur die Unterschiede zu Fig. 8 erläutert.

Das Objekt 18 (gekennzeichnet mit einem Ecken-Muster) umfasst hier einen Sicherungsfortsatz 29 (welcher fest, insbesondere drehfest am übrigen Objekt 18 ausgebildet oder gelagert ist), der im Bereich seines oberen Endes ein Außengewinde 32 ausbildet. Der Sicherungsfortsatz 29 durchragt die Bohrung 24 des Bauteils 17. In einem in Fig. 9 oberen Abschnitt 30 des Sicherungsfortsatzes 29 ist das Bedienteil 9, welches hier ein Innengewinde 31 ausbildet, aufgeschraubt und somit reversibel befestigt; das Bauteil 17 wird dadurch zwischen Objekt 18 und Bedienteil 9 verklemmt. Zum Entfernen des Bauteils 17 kann das Bedienteil 9 abgeschraubt werden, und zum Wiederbefestigen des Bauteils 17 nach dem Aufstecken auf den Sicherungsfortsatz 29 kann das Bedienteil 9 wieder festgeschraubt werden.

**Figur 10** zeigt eine dritte Ausführungsform einer erfindungsgemäßen Montagegruppe 28; es werden nur die wesentlichen Unterschiede zu den vorhergehenden Figuren erläutert. Das Bedienteil 9 ist hier als ein Arretierbolzen 16 ausgebildet. Das Bedienteil 9 ist wiederum über ein Zwischenteil 7 am Leinenteil 1 befestigt.

Der Arretierbolzen 16 dient auch hier zur Festlegung einer gegenseitigen Orientierung zwischen einem Bauteil 17 und einem Objekt 18. Der Arretierbolzen 16 durchragt das Bauteil 17 und das Objekt 18, und weist an seinem äußeren Ende Spreizelemente 19 auf. Solange die Spreizelemente 19 in ihrer gezeigten, ausgefahrenen (gespreizten) Position sind, kann der Arretierbolzen 16 nicht herausgezogen werden, da die Spreizelemente 19 das Objekt 18 im Bereich von Anschlagkanten 20 hintergreifen; das in Fig. 10 untere Ende des Arretierbolzens 16 stellt in so fern einen Abschnitt 26 des Arretierbolzens 16 dar, mit dem dieser im Objekt 18 befestigt ist. Die Spreizelemente 19 sind in die gezeigte, gespreizte Stellung durch Federkraft vorgespannt.

Durch eine nicht näher dargestellte, bevorzugt manuell betätigbare Mechanik können die Spreizelemente 19 in den Arretierbolzen 16 zurückgezogen werden, um den Arretierbolzen 16 aus dem Objekt 18 und dem Bauteil 17 herausziehen oder wieder in diese hineinfahren zu können. Bei herausgezogenem Arretierbolzen 16 kann das dann lose Bauteil 17 beispielsweise gegenüber dem Objekt 18 verschoben werden.

Das Leinenteil 1 ist in nicht näher dargestellter Weise im Bereich der Sicherungsstruktur (siehe Bzz. 2 in Fig. 1) am Objekt 18 befestigt, so dass der Arretierbolzen 16 auch im herausgezogenen Zustand nicht verlorengehen kann.

## Patentansprüche

1. Bedienteil-Sicherungssystem, umfassend
- ein Bedienteil (9) und
- ein flexibles, langgestrecktes Leinenteil (1),
wobei das Leinenteil (1) an einem ersten Ende (E1) eine Sicherungsstruktur (2), insbesondere eine Sicherungsöse, und an einem zweiten Ende (E2) eine Hakeneinrichtung (3) umfasst,
**dadurch gekennzeichnet,**
**dass** das Bedienteil-Sicherungssystem weiterhin ein Zwischenteil (7) aufweist, an welchem eine Konterstruktur (14) zur Befestigung der Hakeneinrichtung (3) ausgebildet ist,
und **dass** das Bedienteil (9) eine Halterungsstruktur (15) zur Befestigung des Zwischenteils (7) aufweist.

2. Bedienteil-Sicherungssystem nach Anspruch 1, **dadurch gekennzeichnet, dass** die Hakeneinrichtung (3) eine elastisch verformbare Verdickung (4) umfasst, und dass die Konterstruktur (14) eine Öffnung (12) umfasst, wobei die Verdickung (4) in einem elastisch zusammengepressten Zustand durch die Öffnung (12) hindurchgeführt werden kann, nicht aber in einem elastisch entspannten Zustand.

3. Bedienteil-Sicherungssystem nach Anspruch 2, **dadurch gekennzeichnet, dass** die Verdickung (4) im Wesentlichen keilförmig ausgebildet ist, wobei sich die Verdickung (4) zum zweiten Ende (E2) des Leinenteils (1) hin verjüngt.

4. Bedienteil-Sicherungssystem nach Anspruch 2 oder 3, **dadurch gekennzeichnet, dass** die Verdickung (4) im elastisch entspannten Zustand an der dem zweiten Ende (E2) des Leinenteils (1) abgewandten Seite eine Sperrfläche (13) ausbildet, die bei eingehakter Hakeneinrichtung (3) an die Konterstruktur (14) in einem Bereich um die Öffnung (12) herum anlegbar ist.

5. Bedienteil-Sicherungssystem nach einem der Ansprüche 2 bis 4,
**dadurch gekennzeichnet,**
**dass** das Leinenteil (1) weiterhin ein Stoppelement (5) umfasst, welches benachbart zur Verdickung (4) an deren dem zweiten Ende (E2) abgewandten Seite ausgebildet ist,
und **dass** das Stoppelement (5) so breit ausgebildet ist, dass es nicht durch die Öffnung (12) der Konterstruktur (14) hindurchgeführt werden kann, so dass im eingehakten Zustand das Leinenteil (1) in einem Einschnürungsbereich (6) zwischen der Verdickung (4) und dem Stoppelement (5) die Öffnung (12) durchragt.

6. Bedienteil-Sicherungssystem nach Anspruch 5, **dadurch gekennzeichnet, dass** im eingehakten Zustand das Stoppelement (5) die Öffnung (12) vollständig überdeckt.

7. Bedienteil-Sicherungssystem nach einem der Ansprüche 5 bis 6,
**dadurch gekennzeichnet, dass** das Stoppelement (5) im Wesentlichen schirmförmig ausgebildet ist.

8. Bedienteil-Sicherungssystem nach einem der Ansprüche 5 bis 7,
**dadurch gekennzeichnet, dass** das Leinenteil (1) mit einem Winkel (α) von maximal 85°, bevorzugt maximal 45°, gegen eine Längserstreckungsrichtung (LR) der Hakeneinrichtung (3) im Bereich des Stoppelements (5) abknickt.

9. Bedienteil-Sicherungssystem nach einem der vorhergehenden Ansprüche, **dadurch gekennzeichnet, dass** das Zwischenteil (7) an und/oder in der Halterungsstruktur (15) verrastbar ist.

10. Bedienteil-Sicherungssystem nach Anspruch 9, **dadurch gekennzeichnet, dass** das Zwischenteil (7) und die Halterungsstruktur (15) einen oder mehrere Rastwulste (8) und eine oder mehrere Rastkanten, insbesondere Rastnuten (11), ausbilden.

11. Bedienteil-Sicherungssystem nach einem der vorhergehenden Ansprüche, **dadurch gekennzeichnet, dass** das Zwischenteil (7) als ein Deckel ausgebildet ist, und dass die Halterungsstruktur (15) eine Ausnehmung (10) im Bedienteil (9) umfasst, in welche der Deckel einsetzbar ist, wobei der Deckel im eingesetzten Zustand die Ausnehmung (10) verschließt.

12. Bedienteil-Sicherungssystem nach Anspruch 11, **dadurch gekennzeichnet, dass** der Deckel kreisrund ausgebildet ist, insbesondere wobei die Öffnung (12) als eine Durchbruchöffnung in der Mitte des Deckels ausgebildet ist.

13. Bedienteil-Sicherungssystem nach einem der vorhergehenden Ansprüche, **dadurch gekennzeichnet, dass** das Zwischenteil (7) eine andere Farbe aufweist als das Bedienteil (9).

14. Bedienteil-Sicherungssystem nach einem der vorhergehenden Ansprüche, **dadurch gekennzeichnet, dass** das Bedienteil (9) als ein Drehgriff, insbesondere als ein Kreuzgriff oder Sterngriff, oder als ein Steckbolzen, insbesondere als ein Arretierbolzen (16) mit betätigbaren Spreizelementen (19), ausgebildet ist.

15. Bedienteil-Sicherungssystem nach einem der vorhergehenden Ansprüche, **dadurch gekennzeichnet, dass** das Leinenteil (1) mit einem gummielastischen Werkstoff gefertigt ist.

16. Gesicherte Bedienteil-Anordnung, umfassend ein Bedienteil-Sicherungssystem nach einem der vorhergehenden Ansprüche und ein Objekt (18), insbesondere eine Maschine, wobei das Zwischenteil (7) an oder in der Halterungsstruktur (15) des Bedienteils (9) befestigt ist, wobei die Hakeneinrichtung (3) des Leinenteils (1) an der Konterstruktur (14) des Zwischenteils (7) eingehakt ist, und wobei die Sicherungsstruktur (2) des Leinenteils (1) am Objekt (18) befestigt ist.

17. Montagegruppe (28), umfassend eine gesicherte Bedienteil-Anordnung nach Anspruch 16 und wenigstens ein durch das Bedienteil (9) am Objekt (18) gesichertes Bauteil (17) mit einer Bohrung (24), wobei
- die Bohrung (24) des Bauteils (17) vom Bedienteil (9) durchragt wird, und das Bedienteil (9) zusätzlich zur Befestigung über das Leinenteil (1) mit einem die Bohrung (24) durchragenden Abschnitt (26) am Objekt (18) reversibel befestigt ist,
- oder die Bohrung (24) des Bauteils (17) von einem Sicherungsfortsatz (29) des Objekts (18) durchragt wird, und das Bedienteil (9) zusätzlich zur Befestigung über das Leinenteil (1) an einem die Bohrung (24) durchragenden Abschnitt (30) des Sicherungsfortsatzes (29) reversibel befestigt ist.

18. Montagegruppe (28) nach Anspruch 17, **dadurch gekennzeichnet, dass** Bauteil (17) in einer Richtung quer zur Bohrung (24) weiter ausgedehnt ist als das Bedienteil (9),
dass die Hakeneinrichtung (3) eine elastisch verformbare Verdickung (4) umfasst, und dass die Konterstruktur (14) eine Öffnung (12) umfasst, wobei die Verdickung (4) in einem elastisch zusammengepressten Zustand durch die Öffnung (12) hindurchgeführt werden kann, nicht aber in einem elastisch entspannten Zustand.

19. Montagegruppe (28) nach Anspruch 17 oder 18, **dadurch gekennzeichnet, dass** das Bedienteil (9) als ein Arretierbolzen (16) mit betätigbaren Spreizelementen (19) ausgebildet ist.
